# FASCICULE DE BREVET EUROPEEN

(11) **EP 0 780 796 B1**
(45) Date de publication et mention de la délivrance du brevet: **10.10.2001**
(21) Numéro de dépôt: 96402732.0
(22) Date de dépôt: 13.12.1996
(51) Int. Cl.: G06T 11/20

(54) **procédé et systéme d'affichage d'images symboliques**
Symbolisches Bildanzeigesystem und -verfahren
Symbolic image display system and method

(30) Priorité: 21.12.1995 FR 9515261
(43) Date de publication de la demande: 25.06.1997
(73) Titulaire: THALES AVIONICS S.A., 78141 Vélizy Villacoublay Cédex (FR)
(72) Inventeur: Auger, Dominique, Thomson-CSF, SCPI, 94117 Arcueil Cedex (FR); Montestrucq, Louis, Thomson-CSF, SCPI, 94117 Arcueil Cedex (FR); Pernia, Olivier, Thomson-CSF, SCPI, 94117 Arcueil Cedex (FR); Urquia, Miguel, Thomson-SCF, SCPI, 94117 Arcueil Cedex (FR)
(74) Mandataire: Guérin, Michel

(56) Documents cités:
- GB-A- 2 243 061
- US-A- 5 185 852
- US-A- 5 265 210

## Description

L'invention est relative à la génération de symboles en temps réel sur un écran de visualisation. L'application typique qui peut en être faite est la génération de symboles pour l'aide au pilotage et à la navigation aérienne : affichage d'une boule ciel-terre avec horizon tournant et indication d'assiette de l'avion, affichage d'un plan de vol, d'une rosace de cap, d'échelles défilantes d'altimétrie, de vitesse, d'informations alphanumériques diverses, etc.

Ces symboles sont engendrés à partir d'un générateur de symboles. Le générateur de symboles est un calculateur qui reçoit des informations nécessaires en fonction de l'affichage à réaliser, par exemple des informations en provenance de capteurs répartis dans l'avion, et qui produit des coordonnées de points successifs d'un tracé à afficher sur l'écran et des indications de couleur de ces tracés. Ces coordonnées et indications sont placées dans une mémoire d'image, et c'est la lecture de cette mémoire d'image qui fournit point par point les informations de commande de l'écran de visualisation pour qu'apparaisse l'image désirée.

Pour des raisons d'encombrement, on tend à remplacer les affichages à tubes cathodiques par des affichages à écrans plats, notamment des écrans à cristaux liquides. Ces écrans sont de type matriciel, ce qui pose des problèmes particuliers.

Les écrans matriciels tendent à produire des tracés crénelés qui détériorent le confort de vision de l'observateur, l'oeil étant particulièrement sensible aux transitions brusques dans le passage du tracé d'un point à un autre de l'écran.

C'est pourquoi on a déjà proposé dans le passé d'effectuer un lissage des tracés. Ce lissage consiste pour l'essentiel à tracer des traits relativement épais, chaque trait ayant la largeur de plusieurs lignes ou colonnes autour du trait théorique à tracer, avec une répartition de luminance à l'intérieur du trait, c'est-à-dire que la partie centrale du trait est plus brillante que les bords du trait. Ce lissage diminue considérablement l'impression désagréable causée par la nature matricielle de l'écran.

Le brevet français FR-A-2 619 982 et le brevet français FR-A-2 666 165 définissent les bases de ce lissage, consistant à remplacer chaque point du tracé théorique par une microplage de NxM points autour du point théorique et à fournir à la mémoire d'image des valeurs de luminance et de couleurs (qu'on appellera plus généralement "coefficient d'appartenance au tracé") pour tous les points d'un tracé élargi résultant de la succession des microplages le long du tracé théorique filaire.

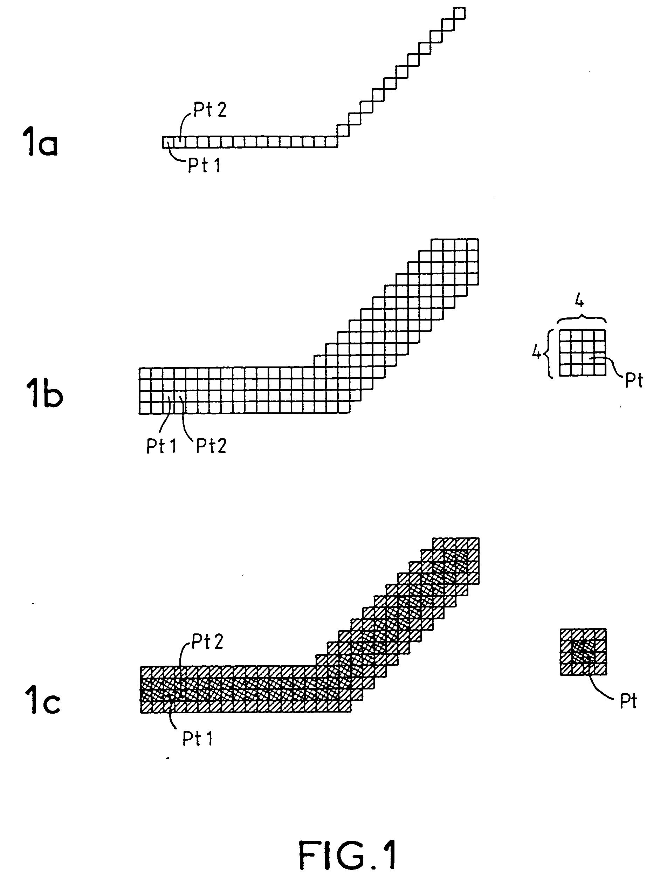

La figure 1a représente un tracé théorique filaire ayant la largeur d'un point élémentaire de l'écran matriciel et composé d'une succession de points Pt1, Pt2, etc.; la figure 1b représente un tracé élargi résultant du remplacement de chaque point Pt du tracé filaire par une microplage de 4 point sur 4 points, c'est-à-dire une matrice de 16 points centrée sur le point Pt comme représenté. La figure 1c représente d'une part une microplage, affectée maintenant d'une modulation de luminosité (représentée par une densité de hachurage variable), et d'autre part le tracé lissé qui résulte de cette modulation de luminosité appliquée aux microplages.

Cependant, ce lissage implique une puissance de calcul importante : le générateur de symboles doit fournir des tracés calculés à une cadence rapide pour que les images soient rafraîchies en permanence en fonction de l'évolution des données à afficher. Des circuits de calcul rapide doivent être interposés entre le générateur de symboles et la mémoire d'image, et, pour chaque nouveau point de tracé fourni par le générateur, il faut recalculer les valeurs de luminance (et éventuellement de couleur) des points environnants, même s'ils ont déjà été calculés à l'occasion du tracé du point précédent. Il faut recalculer ces luminances en prenant en compte les valeurs précédemment stockées dans la mémoire d'image : ceci résulte du recouvrement des microplages les unes sur les autres; il y a une corrélation à faire entre les calculs successifs faits pour un même point de l'écran. Cela veut dire qu'il faut accéder à la mémoire d'image avec une fréquence beaucoup plus grande que si on n'affichait qu'un seul point sur le tracé. Or il y a des limites physiques aux possibilités d'adressage en lecture et en écriture des mémoires de grande capacité telles qu'une mémoire d'image.

C'est pourquoi le brevet français FR-A-2 666 165 a proposé une architecture spéciale dans laquelle on utilise autant de mémoires différentes, adressées en parallèle, qu'il y a de points (NxM) dans les microplages, afin de pouvoir lire et écrire la totalité d'une microplage en une seule étape.

Cette solution peut être satisfaisante si la dimension NxM de la microplage n'est pas trop importante. Mais dès que cette dimension augmente, le circuit de calcul de lissage devient impossible à réaliser sous forme d'un circuit intégré car il doit comporter un nombre d'entrées-sorties extrêmement élevé pour l'adressage de la mémoire d'image. On peut difficilement réaliser des microplages de 4x4 points avec un seul circuit intégré de lissage, pour une image de 1024 sur 1024 points.

Or il est important de pouvoir utiliser des microplages de dimensions plus importantes, par exemple 6x6 et même jusqu'à 12x12 :
- d'abord parce qu'il peut être utile de représenter des tracés particulièrement épais pour certains symboles sans que le générateur de symboles soit obligé de tracer plusieurs traits en parallèle, ce qui ralentirait son fonctionnement;
- ensuite parce que certains types de lissage de tracés nécessitent une largeur de microplage plus importante que d'autres, en fonction de la nature des contrastes souhaités entre couleur du trait et couleur du fond;
- enfin parce que des microplages plus larges permettent de tracer des traits de largeur variable, les coefficients périphériques de la microplage pouvant être mis à zéro pour tracer des traits moins larges; ceci est important parce que l'expérience montre que les traits colorés doivent être tracés plus larges que les traits blancs.

C'est pourquoi l'invention propose à la fois un nouveau procédé de traitement d'image et une nouvelle architecture de système d'affichage d'images symboliques, permettant d'effectuer des lissages de tracés par des microplages de dimensions importantes avec un meilleur compromis entre la fréquence des accès à la mémoire d'image et le nombre de connexions d'accès à cette mémoire.

Selon l'invention, on propose donc d'abord un système d'affichage comprenant un générateur de symboles à afficher, un circuit de lissage de tracé, et une mémoire d'image, le générateur de symboles fournissant les coordonnées de points successifs d'un tracé, le circuit de lissage étant apte à calculer des codes numériques appelés coefficients d'appartenance au tracé pour un groupe G de NxM points entourant un point de coordonnées X, Y, après avoir calculé des coefficients d'appartenance au tracé pour un autre groupe G' de NxM points entourant un point de coordonnées X', Y' précédemment fourni par le générateur de symboles, système caractérisé en ce que le circuit de lissage comprend :
- des moyens pour envoyer vers la mémoire d'image des coefficients d'appartenance au tracé uniquement pour les points du groupe G' qui n'appartiennent pas au groupe G, en fonction du vecteur reliant le point X',Y' au point X,Y,
- des moyens pour calculer les coefficients d'appartenance des points du groupe G en tenant compte des coefficients précédemment calculés pour les points communs aux groupes G et G',
- et des moyens pour conserver dans une mémoire de NxM cellules, en vue d'un prochain calcul, les coefficients d'appartenance calculés pour les points du groupe G.

On explicitera plus loin ce qu'on entend par "coefficient d'appartenance au tracé" : à titre d'exemple, pour un tracé d'un trait blanc sur fond noir, épaissi à la largeur d'une microplage, le coefficient est une valeur de luminosité relative, élevée pour un point de la microplage situé vers le centre du tracé et allant en diminuant pour les points situés près du bord du tracé. Mais on comprendra que ce coefficient s'exprime de manière plus complexe pour un trait d'une couleur sur un fond d'une autre couleur, pour un trait d'une couleur détourée par un liseré noir sur un fond d'une autre couleur ou presque de la même couleur, etc.

Le circuit de lissage comprend de préférence un réseau de NxM cellules de calcul et de mémorisation, reliées les unes aux autres de manière à pouvoir fonctionner en registre à décalage droite/gauche, gauche/droite, haut/bas, et bas/haut, et un circuit de contrôle apte à définir des décalages à effectuer simultanément pour toutes les cellules. Le registre est en anneau, à la fois horizontalement, les sorties des cellules de l'extrémité gauche du réseau étant reliées aux entrées des cellules de l'extrémité droite et réciproquement, et verticalement, les cellules de l'extrémité basse étant reliées à celles de l'extrémité haute et réciproquement.

Le circuit de contrôle reçoit du générateur de symboles les coordonnées X, Y d'un point du tracé et mémorise les coordonnées du point précédent pour établir des signaux de décalage en fonction du vecteur de déplacement (X-X', Y-Y').

Le circuit de contrôle commande l'envoi à la mémoire d'image des coefficients calculés par les cellules d'une ligne extrême, ou d'une colonne extrême, ou d'une ligne et une colonne extrêmes du réseau, en fonction du vecteur de déplacement. Il est capable aussi d'effacer les contenus de ces cellules.

Chaque cellule comporte des moyens de multiplexage pour recevoir soit un coefficient issu d'une table sélectionnée par le circuit de contrôle, soit la sortie d'une cellule voisine sélectionnée par le circuit de contrôle. Le circuit de contrôle est apte à fournir d'abord des signaux de commande de décalage des cellules puis un signal d'autorisation de comparaison entre un coefficient contenu dans une cellule et un coefficient fourni par une table.

L'objet de l'invention est donc un nouveau système d'affichage de tracé, mais c'est également un nouveau un procédé de traitement de tracé à afficher sur un écran de visualisation à partir d'un tracé théorique fourni par un générateur de symboles, le procédé utilisant un circuit de lissage interposé entre le générateur de symboles et une mémoire d'image pour effectuer un cycle de calcul de lissage pour chaque point de coordonnées X, Y fourni par le générateur de symboles, et le circuit de lissage utilisant au cours de ce cycle au moins une matrice de coefficients prédéterminés appelés coefficients de consigne pour un groupe G de NxM points autour du point X, Y, ces points définissant un tracé élargi, le procédé consistant à calculer des coefficients réels pour chacun des NxM points du tracé élargi en fonction d'un coefficient de consigne pour ce point et d'un coefficient calculé pour ce point au cours du cycle de calcul précédent, le cycle précédent correspondant à un point précédent X', Y' du tracé théorique entouré par un groupe G' de NxM points recouvrant partiellement le groupe G. Le procédé selon l'invention est caractérisé en ce qu'il comporte les étapes suivantes pour chaque cycle de calcul
- détermination dans le circuit de lissage des points du groupe G' qui n'appartiennent pas au groupe G, en fonction du vecteur reliant le point X',Y' au point X, Y;
- transmission à la mémoire d'image, des coefficients réels calculés pour ces points au cours du cycle précédent et conservés en mémoire dans le circuit de lissage;
- calcul des coefficients réels pour les points du groupe G à partir des coefficients de consigne et des coefficients réels calculés pour les autres points du groupe G' et conservés en mémoire dans le circuit de lissage;
- stockage en mémoire, en vue du cycle de calcul suivant, des coefficients réels calculés pour tous les points du groupe G.

Dans ce procédé, la détermination des points du groupe G' qui n'appartiennent pas au groupe G, se fait par comparaison entre les coordonnées du point courant X, Y et du point précédent X', Y', cette comparaison indiquant le sens de décalage entre les microplages G' et G, donc leur zone recouvrement et leur zone de non recouvrement.

Après transmission des coefficients stockés, on peut effacer les valeurs de coefficients dans les zones de non-recouvrement, puis on calcule de nouveaux coefficients pour tous les points du groupe G en fonction d'un coefficient de consigne et d'une valeur de coefficient calculée pour le même point d'écran au cycle précédent et mémorisée dans le circuit de lissage.

En résumé, selon l'invention, au lieu d'inscrire dans la mémoire d'image tous les coefficients d'un groupe G' de NxM points après les avoir calculés, et d'aller rechercher à nouveau dans la mémoire d'image certains de ces coefficients pour un calcul d'un nouveau groupe G qui a des points communs avec le précédent, on n'inscrit dans la mémoire d'image que les points définitivement traités, qui ne seront plus nécessaires pour établir la suite du même tracé. Tant que les points ne sont pas définitivement traités, les coefficients calculés restent mémorisés dans le circuit de lissage, de préférence dans un réseau de NxM cellules de calcul et de mémorisation agencé en registre à décalage horizontal et vertical fonctionnant en sens direct et en sens inverse.

D'autres caractéristiques et avantages de l'invention apparaîtront à la lecture de la description détaillée qui suit et qui est faite en référence aux dessins annexés dans lesquels :
- la figure 1, déjà décrite représente un tracé théorique filaire, un tracé élargi par l'emploi de microplages, et un tracé élargi et filtré par des coefficients d'appartenance au tracé;
- la figure 2 représente un schéma général de système d'affichage de tracés lissés;
- la figure 3 représente l'organisation du réseau de cellules de calcul et de mémorisation utilisé dans le circuit de lissage;
- la figure 4 représente en détail une cellule du réseau;
- la figure 5 représente un chronogramme expliquant le fonctionnement du réseau de cellules.
- la figure 6 représente un tableau récapitulant les opérations effectuées pour passer d'un point à un autre du tracé.

L'affichage d'un tracé à l'aide d'un générateur de symboles consiste à faire produire par le générateur les coordonnées des points successifs du tracé théorique. Le générateur est un calculateur convenablement programmé, qui utilise d'une part des logiciels de calcul de tracés et d'autre part des données numériques à partir desquelles les logiciels font les calculs. Les données numériques viennent par exemple de capteurs, ou de toute autre source. Par exemple, si le tracé est une échelle défilante d'altitude d'un avion, on comprend qu'il faut au minimum un capteur d'altitude. Mais si le tracé est un programme de vol, les données du vol sont introduites sur un clavier ou viennent d'un autre logiciel. On supposera, dans l'application à un avion, que le générateur de symboles reçoit des données d'un calculateur de bord qui lui-même gère les informations de capteurs répartis dans l'avion.

En pratique, le générateur fournit des coordonnées de points avec une résolution supérieure à celle de l'écran matriciel. Par exemple, si l'écran comporte des lignes de 1024 points et des colonnes de 1024 points (codage sur 10 bits), le générateur peut fournir des coordonnées de points sur 12 bits (4096 points en ligne et autant en colonne).

Dans un premier temps, on considérera que les coordonnées X, Y fournies par le générateur sont codées avec la même résolution que l'écran. Dans un deuxième temps on précisera l'incidence sur l'invention d'un codage de points plus précis que la résolution de l'écran matriciel.

Classiquement, le générateur de symboles fournit des tracés sans "trous", c'est-à-dire que le tracé utilise au moins tous les points de l'écran situés sur ce tracé. Cela veut dire que le générateur de symboles fournira successivement des points dont les coordonnées sont incrémentées à chaque fois au plus d'une unité.

Il y a donc uniquement huit possibilités de passer d'un point X', Y' à un autre point X,Y du tracé théorique :
déplacements selon les axes d'abscisse et d'ordonnée :
   - à droite : X=X'+1 et Y = Y'
   - à gauche : X = X'-1 et Y = Y'
   - en haut : X=X' et Y=Y'+1
   - en bas: X=X' et Y=Y'-1
déplacement diagonaux :
   - en haut à droite : X = X'+1 et Y = Y'+1
   - en haut à gauche : X = X'-1 et Y = Y'+1
   - en bas à droite : X = X'+1 et Y=Y'-1
   - en bas à gauche : X = X'-1 et Y=Y'-1

Dans un tracé déterminé, le générateur de symboles fournit donc des points dont les coordonnées se suivent de telle manière que l'on peut immédiatement-déduire des coordonnées X', Y', et X, Y quelle est la direction de déplacement du tracé entre ces deux points, parmi les huit directions possibles. Cette direction va être utilisée selon l'invention pour réduire de manière très significative les fréquences d'accès à la mémoire d'image.

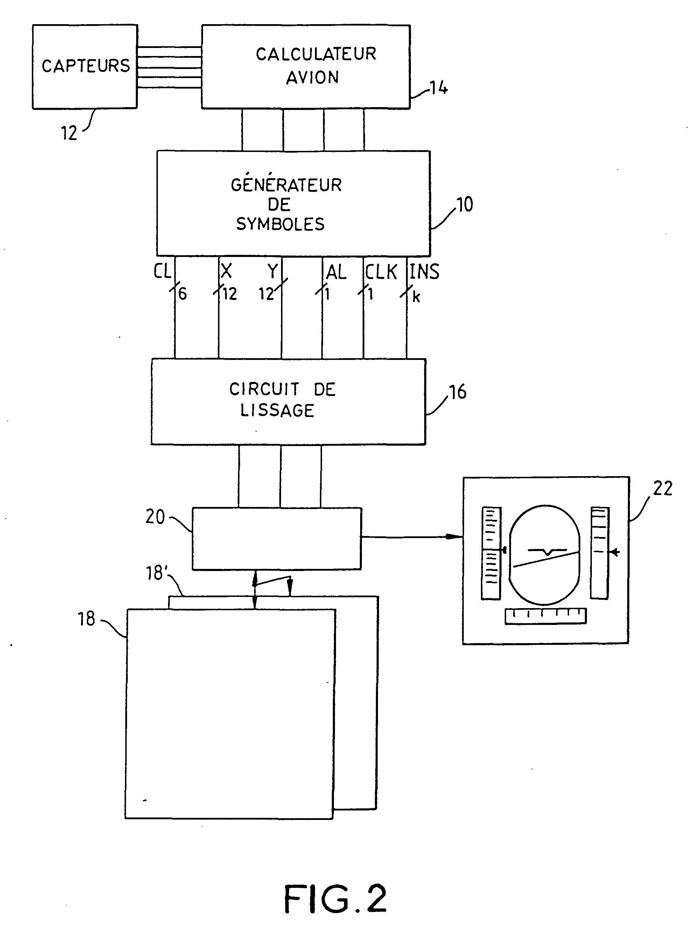

La figure 2 représente la structure générale du système d'affichage selon l'invention. Le générateur de symboles est désigné par la référence 10. Il reçoit des informations de capteurs 12, éventuellement par l'intermédiaire d'un calculateur 14, et il fournit les coordonnées X, Y des points d'un tracé théorique à un circuit de lissage de tracé 16. Il fournit également une information de couleur de tracé, par exemple codée sur 6 bits, et une information d'allumage ou d'extinction de point du tracé (1 bit).

L'information d'allumage ou d'extinction n'est pas utile à l'explication de l'invention. Elle résulte seulement du fait que le générateur de symboles peut fournir plusieurs tracés ou des tracés discontinus de sorte qu'il faut à certains moments se rendre d'un point de fin de premier tracé à un point de début d'un autre tracé sans faire apparaître sur l'écran la trace de ce déplacement. Dans ce cas, le bit d'allumage est à zéro.

Le générateur de symboles fournit enfin au circuit de lissage des instructions INS concernant le type de lissage à effectuer. Le lissage fait appel à des matrices de microplages, qui sont des tables de coefficients d'appartenance au tracé, les tables pouvant être différentes selon le type de lissage désiré, et ces instructions servent principalement à sélectionner des tables de coefficients ou des groupes de tables de coefficients. Les tables sont de préférence mémorisées dans le circuit de lissage 16.

Le circuit de lissage 16 remplace chaque point X, Y du tracé théorique par une microplage de NxM points autour de ce point (en général N = M); la microplage comprend un coefficient d'appartenance au tracé pour chacun de ces NxM points; la détermination d'un coefficient réel pour un de ces points se fait par itération, en partant d'un coefficient de consigne d'une table désignée par le générateur de symbole. C'est le circuit de lissage qui réalise ce calcul de coefficients réels. Il s'agit d'un processus itératif du fait que les microplages qui remplacent les points du tracé théorique se recouvrent partiellement; par conséquent un point déterminé du tracé lissé intervient plusieurs fois de suite dans les calculs de coefficients d'appartenance au tracé lissé; il intervient tant qu'il fait partie d'une microplage entourant un point de tracé théorique fourni par le générateur de symboles.

Le circuit de lissage fournit des adresses de points du tracé lissé, et des informations de luminance et chrominance de ces points à une mémoire d'image 18, par l'intermédiaire d'un circuit d'écriture 20. Les informations fournies résultent du calcul de coefficients d'appartenance au tracé fait par le circuit de lissage. Les informations calculées peuvent être fournies sous forme brute ou sous forme codée. L'écran de visualisation 22 reçoit périodiquement la totalité des informations stockées dans la mémoire d'image et affiche l'image globale stockée dans la mémoire. De préférence, il y a deux mémoires d'image 18 et 18' travaillant en alternance, l'une étant lue pour l'affichage sur l'écran pendant que l'autre reçoit de nouvelles informations et réciproquement. Le terme de "coefficient d'appartenance au tracé" a été choisi pour qualifier les codes numériques affectés aux points des microplages. Ce terme peut recouvrir différentes notions pratiques qui, mathématiquement, sont équivalentes à une sorte de filtrage de valeurs numériques affectées aux différents points du tracé élargi par les microplages.

Dans le cas le plus simple, le coefficient d'appartenance au tracé peut être considéré comme un coefficient de luminosité des différents points du tracé lissé élargi : le générateur de symboles fournit la colonne vertébrale du tracé, c'est-à-dire un tracé théorique filaire de largeur égale à la largeur d'un point de l'écran; à partir de ce tracé filaire, le circuit de lissage établit un tracé élargi; la largeur du tracé élargi est fonction de la dimension NxM d'une microplage de N points en ligne et M points en colonne qu'on substitue à chaque point du tracé filaire. Et le circuit de lissage affecte des coefficients de luminosité à chaque point du tracé élargi, essentiellement pour que le centre du tracé soit bien lumineux et que les bords soient atténués, donnant ainsi l'impression de lissage désirée.

Dans une situation plus complexe, le trait peut être un trait coloré sur fond d'une autre couleur, et le lissage peut consister à passer progressivement de la couleur du trait à la couleur du fond sans faire intervenir des couleurs mélangées qui peuvent être très différentes à la fois de la couleur du trait et de la couleur du fond. Egalement, tout particulièrement dans le cas de couleur de trait peu contrastée par rapport à une couleur de fond, on peut souhaiter souligner le contour du trait par un fin liseré (en principe noir); les microplages permettent alors d'affecter
- à la position centrale du trait, des coefficients de luminosité plus élevés, pour la couleur du trait;
- à la position désirée pour le liseré, un coefficient de luminance nul;
- à l'extérieur du liseré, des coefficients de luminosité croissant vers l'extérieur, mais correspondant à la couleur du fond.

Ceci montre comment la notion de coefficient de luminosité des points du trait doit en pratique être considérée plutôt comme un coefficient d'appartenance au tracé, complexe du fait qu'il peut faire intervenir plusieurs couleurs.

Pour un type de lissage déterminé, correspondant à une instruction déterminée fournie par le générateur de symbole, on considérera d'abord que la matrice de microplage à utiliser pour le tracé est fixe; en pratique cependant, on verra comment elle peut varier en fonction des bits de poids faible des coordonnées X, Y fournies par le générateur lorsque ces bits correspondent à une résolution supérieure à celle de l'écran.

Le circuit de lissage fonctionne en effectuant un cycle de calcul de coefficients d'appartenance au tracé, le cycle de calcul étant répété à chaque nouvelle valeur de position X, Y fournie par le générateur de symboles. Chaque cycle de calcul comporte un calcul de NxM coefficients d'appartenance correspondant à la microplage de NxM points entourant le point X, Y.

Le coefficient réel Cpq calculé pour un point déterminé de coordonnées P,Q du tracé élargi tient compte :
- de la position i, j du point P, Q à l'intérieur de la microplage centrée sur le point X, Y du tracé théorique,
- du coefficient de consigne Ccij défini pour le point i, j dans la matrice de consigne choisie,
- mais aussi du coefficient C'pq calculé précédemment pour ce même point P, Q du tracé élargi, lors du cycle de calcul effectué pour le point précédent X', Y' du tracé théorique, dans la mesure où le point P, Q appartenait aussi à une microplage centrée sur le point X', Y'.

En effet, en supposant qu'un point P, Q du tracé élargi se soit déjà vu attribuer un coefficient d'appartenance, il ne faudrait pas que des calculs ultérieurs lui attribuent un coefficient de moins en moins élevé, du seul fait qu'au fur et à mesure de la progression du tracé le point sort progressivement des microplages successivement considérées.

Par conséquent, le calcul fait une corrélation entre le coefficient imposé Ccij pour un point P, Q par la microplage de consigne et le coefficient précédemment calculé C'pq pour ce point. La corrélation la plus simple et la plus efficace consiste à prendre comme nouveau coefficient Cpq pour un point P, Q la valeur la plus élevée SUP(Ccij, C'pq).

Selon l'invention, lors de la réception d'un point X', Y', les coefficients C'pq sont calculés par un circuit de calcul (appartenant au circuit de lissage) pour chacun des NxM points d'une microplage G' centrée sur un point X', Y'et les NxM coefficients C'pq sont conservés en mémoire dans ce circuit de calcul jusqu'à la réception d'un nouveau point X, Y auquel correspond une nouvelle microplage G. A la réception de ce nouveau point, on détermine quels sont les points de la microplage G' qui n'appartiennent pas à la nouvelle microplage G et qui n'interviendront donc pas dans les calculs de corrélation pour la microplage G. On envoie les coefficients mémorisés pour ces points vers la mémoire d'image. Ils sont envoyés parce qu'ils sont définitivement traités et qu'il ne sera pas nécessaire d'aller les rechercher dans la mémoire d'image pour de nouvelles corrélations.

Comme on l'a expliqué précédemment, il n'y a que huit possibilités de passer du point X', Y' au point X, Y. Et à chaque possibilité correspond une certaine catégorie de points qui sont ainsi définitivement traités.

Déplacement à droite : la colonne complètement à gauche de la microplage G' est définitivement traitée et n'appartient pas à la nouvelle microplage G. Les coefficients de cette colonne sont envoyés vers la mémoire d'image.

Déplacement à gauche : la colonne de droite de la microplage G' est définitivement traitée.

Déplacement en haut : c'est la ligne inférieure.

Déplacement en bas : c'est la ligne supérieure.

Déplacement diagonal en haut à droite : la colonne de gauche et la ligne inférieure.
etc.

Cette notion de points définitivement traités suppose en pratique que le tracé ne subit pas de points de rebroussement. C'est le cas général, et de toutes façons, s'il y en avait, on pourrait considérer qu'il y a une succession de deux tracés différents et effectuer d'abord un traitement de fin de tracé puis un traitement de nouveau tracé, les opérations de début et de fin nécessitant de toutes façons toujours des traitements particuliers.

Pour mettre en oeuvre ce principe, on comprend qu'on pourrait utiliser dans le circuit de lissage d'une part un circuit de calcul et d'autre part une mémoire de stockage des NxM coefficients calculés : on stockerait dans la mémoire les NxM coefficients calculés, puis on irait chercher à chaque fois par adressage de cette mémoire les coefficients définitivement traités pour les transmettre à la mémoire d'image, on irait chercher également les coefficients non définitivement traités pour les corréler avec des coefficients de la matrice de consigne, et enfin on réenregistrerait dans cette mémoire les NxM nouveaux coefficients calculés.

On préfère utiliser comme circuit de calcul une structure originale en réseau de NxM cellules de calcul et de mémorisation, ces cellules étant organisées entre elles en registre à décalage permettant des décalages à droite, à gauche, en haut et en bas. Le registre à décalage est fermé sur lui-même en anneau aussi bien dans le sens de décalage droite-gauche et gauche-droite que dans le sens haut-bas et bas-haut, ce qui signifie par exemple que pour un décalage à droite, la sortie de la cellule la plus à droite est rebouclée sur l'entrée de la cellule la plus à gauche.

Ce bouclage en anneau dans les deux sens, à la fois horizontalement et verticalement, permet comme on le verra de placer dans une cellule Cij le coefficient calculé au cycle précédent dans une des huit cellules voisines pour le même point P, Q, alors que ce point P, Q se trouve maintenant à une position différente dans la matrice NxM du fait du décalage de la microplage entre deux cycles successifs.

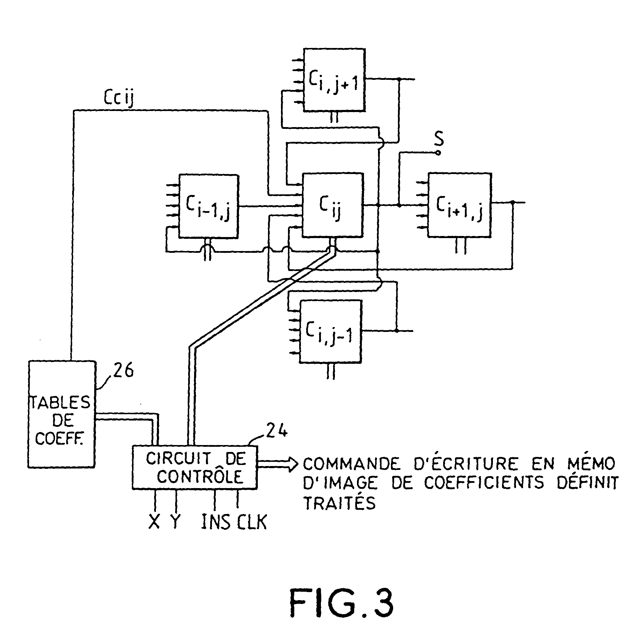

On a représenté sur la figure 3 le principe de l'organisation du réseau de cellules. On a représenté une cellule de calcul parmi les N cellules en ligne et M cellules en colonne, et ses quatre voisines immédiates. La cellule Cij, de rang i, j opère un calcul sur une position déterminée de rang i, j dans la microplage de dimension NxM.

Les cellules de calcul effectuent simultanément les calculs de coefficient pour une position X, Y fournie par le générateur de symboles, et recommencent un nouveau calcul à la position suivante fournie par le générateur. Et à l'occasion d'un calcul pour le point X, Y elles fournissent chacune un coefficient réel Cpq calculé pour un point de coordonnées P, Q sur l'écran, correspondant à une position i, j dans la microplage entourant le point X, Y.

Chaque cellule comporte une sortie S et cinq entrées, pour recevoir soit un coefficient de consigne Ccij pour la position i, j soit un coefficient C'pq préalablement calculé pour le même point d'image P, Q, coefficient qui provient d'une cellule voisine à droite, à gauche, en haut ou en bas, selon le sens de déplacement effectué pour aboutir du point précédent X', Y' au point courant X, Y. La cellule Cij a quatre entrées spécifiques pour pouvoir recevoir les sorties de quatre cellules voisines et en sélectionner une.

Seules les connexions partant de la cellule Cij ou aboutissant à cette cellule sont représentées pour ne pas surcharger la figure.

Un circuit de contrôle 24 permet de commander les cellules pour exécuter les séquences de décalage, de calcul, et de mémorisation, nécessaires à chaque cycle de calcul. Ce circuit de contrôle reçoit du générateur de symboles les coordonnées X, Y, et il mémorise les coordonnées précédentes X', Y' au moins le temps de déterminer la direction du vecteur (X-X', Y-Y'). Il reçoit également du générateur les instructions INS, notamment pour sélectionner une table de coefficients de consigne dans une mémoire de tables 26.

Pour obtenir une configuration du réseau de cellules en registre à décalage, la sortie S de la cellule de rang i, j est reliée à une entrée spécifique des cellules voisines qui sont les cellules suivantes :
- cellule immédiatement à droite, de rang [i+1, j]
- cellule immédiatement à gauche, de rang [i-1, j]
- cellule immédiatement au dessus, de rang [i, j+1]
- cellule immédiatement au dessous, de rang [i, j-1]

On rappelle que les rangs i+1, i-1 doivent s'entendre modulo N et les rangs j+1, j-1 doivent s'entendre modulo M puisque les registres sont refermés en anneau aussi bien horizontalement que verticalement. C'est le circuit de contrôle 24 qui détermine, pour toutes les cellules à la fois, quelle est l'entrée spécifique à utiliser, déterminant ainsi pour tout le réseau un sens de décalage.

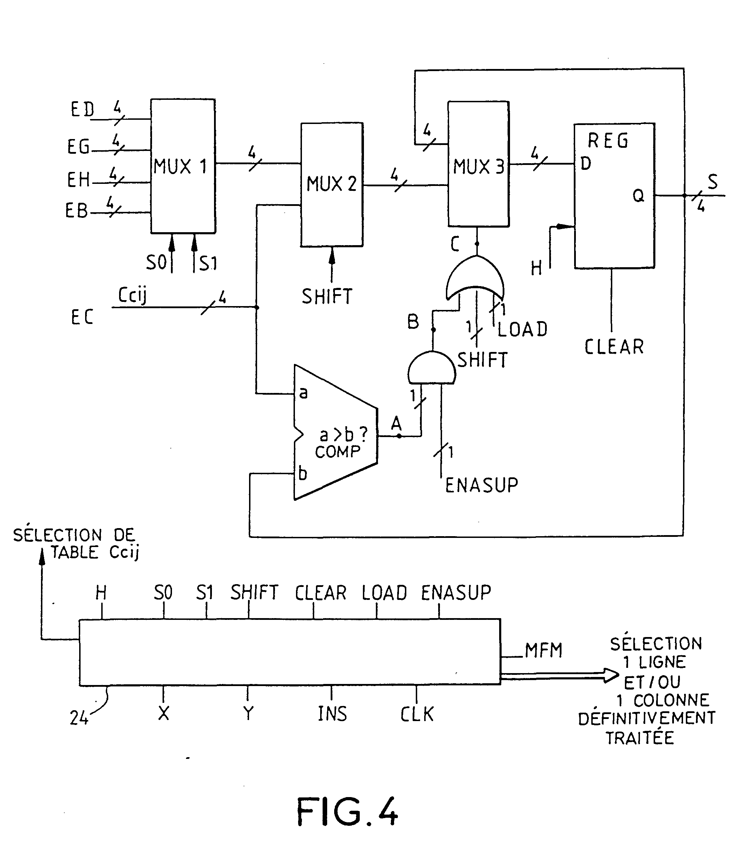

La figure 4 représente le détail d'une cellule Cij.

Les cinq entrées spécifiques de chaque cellule sont les suivantes :
- entrée ED reliée à la sortie de la cellule de droite
- entrée EG reliée à la sortie de la cellule de gauche
- entrée EH reliée à la sortie de la cellule du dessus
- entrée EB reliée à la sortie de la cellule du dessous
- entrée EC pour recevoir un nouveau coefficient de consigne Ccij issu d'une table de coefficients d'appartenance au tracé, sélectionnée par le circuit de lissage en fonction d'instructions données par le générateur de symboles, et éventuellement fonction des bits de précision des coordonnées X, Y pour le calcul en cours.

Les connexions entre cellules sont représentées sous forme de fils simples; il y a cependant autant de fils que de bits de codage des coefficients, par exemple 4.

La sélection de l'entrée à utiliser pour le calcul au point X, Y est effectuée par deux multiplexeurs.

Un premier multiplexeur MUX1 sélectionne une des entrées parmi les entrées ED, EG, H, EB, et il est commandé par des signaux logiques S0, S1 issus du circuit de contrôle 24, communs pour toutes les cellules.

Le couple S0, S1 définit le choix de l'entrée parmi les quatre, commun pour toutes les NxM cellules, et définit donc le sens de décalage de l'ensemble du registre constitué par les NxM cellules. Ce sens dépend exclusivement de la différence entre les coordonnées X, Y du point courant, et les coordonnées X', Y' du point précédent. Le circuit de contrôle reçoit donc les coordonnées X, Y et conserve les coordonnées du point précédent pour pouvoir faire la comparaison et émettre les signaux S0, S1 qui conviennent. Etant donné que le registre ne peut pas faire des décalages en diagonale, alors que des décalages en diagonale peuvent être nécessaires, on prévoit que les décalages se font en deux temps, le premier temps (signaux S0a, S1a) étant un décalage en ligne ou en colonne, et le deuxième temps (signaux S0b, S1b), utilisé seulement pour des décalages en diagonale, étant un décalage perpendiculaire au premier. Le circuit de contrôle 24 fournit sur les entrées S0, S1 successivement un couple S0a, S1a, puis S0b, S1b.

Un deuxième multiplexeur MUX2 permet de sélectionner soit la sortie du premier multiplexeur, soit l'entrée EC issue d'une table de coefficients. Le multiplexeur MUX2 est commandé par une commande SHIFT qui, si elle est active, sélectionne la sortie du premier multiplexeur, et, si elle est inactive, sélectionne l'entrée EC. Il y a deux commandes SHIFT actives successives si un décalage en diagonale doit être effectué.

Un troisième multiplexeur MUX3 permet de charger dans une bascule de mémoire REG soit la valeur précédemment contenue dans cette bascule (rebouclage de la sortie de la bascule sur son entrée), soit une nouvelle valeur issue de la sortie du deuxième multiplexeur MUX2. La bascule est une bascule D basculant lors d'une impulsion d'horloge H, et constituée en fait d'autant de bascules binaires qu'il y a de bits de codage des coefficients calculés.

Enfin, une corrélation est effectuée entre le coefficient C'pq précédemment calculé pour un point P, Q donné, présent à la sortie de la bascule REG après les décalages appropriés, et la nouvelle valeur de consigne Ccij proposée par la table sur l'entrée EC. La corrélation prévue ici est très simple, c'est la valeur supérieure parmi les deux valeurs qui est adoptée. On obtient un coefficient réel Cpq = SUP(Ccij, C'pq). Ceci est réalisé grâce à un comparateur COMP qui reçoit sur une entrée un coefficient de consigne Ccij provenant de l'entrée EC et sur une autre entrée la valeur C'pq précédemment calculée, provenant de la sortie de la bascule. L'une des entrées du comparateur est donc reliée à l'entrée EC et l'autre est reliée à la sortie S de la bascule.

La sortie du comparateur est un bit indiquant quelle est la valeur la plus élevée et commandant, au cours d'une phase de calcul de valeur supérieure définie par un signal d'autorisation ENASUP, le troisième multiplexeur MUX3 pour remettre dans la bascule la valeur C'pq qu'elle contenait auparavant (si c'est elle la plus élevée) ou la remplacer par un nouveau coefficient Ccij issu de l'entrée EC (si c'est lui le plus élevé).

Une porte ET commandée par le signal ENASUP laisse passer la sortie du comparateur vers la commande du multiplexeur MUX3 par l'intermédiaire d'une porte OU. La porte OU fournit un signal de commande de basculement du multiplexeur MUX3
- soit issu de la commande SHIFT s'il faut inscrire dans le registre un contenu issu d'une cellule voisine, en première étape de calcul;
- soit en provenance du comparateur COMP s'il faut inscrire un nouveau coefficient dans le registre, en deuxième étape de calcul,
- soit enfin en provenance d'une commande de chargement initial LOAD, en pratique dans le cas d'un début de tracé où il faut écrire dans le registre des nouveaux coefficients sans corrélation avec d'anciennes valeurs. La commande LOAD n'est pas obligatoire.

La bascule REG comporte une commande CLEAR d'effacement, c'est-à-dire de remise à zéro du coefficient d'appartenance obtenu en sortie. Cette commande est contrôlée par le circuit de contrôle 24, soit pour une cellule individuelle, soit pour une ligne ou une colonne de cellules, et en pratique surtout pour la première ligne, la dernière ligne, la première colonne et la dernière colonne du réseau de NxM cellules. La commande CLEAR peut être également affectée à toutes les cellules à la fois, en particulier s'il n'y a pas de commande LOAD.

Enfin, les sorties des registres de certaines cellules (celles qui sont sur les bords du réseau) peuvent être envoyées vers la mémoire d'image. Le circuit de contrôle 24 est agencé pour permettre d'envoyer à la mémoire d'image, grâce à une commande MEM, les valeurs de sortie des bascules REG de
- la première ligne, ou
- la dernière ligne, ou
- la première colonne, ou
- la dernière colonne, ou
- la première ligne et la première colonne, ou
- la première ligne et la dernière colonne, ou
- la dernière ligne et la première colonne, ou
- la dernière ligne et la dernière colonne.
en fonction du vecteur (X-X', Y-Y') qui définit quels est la ligne et/ou la colonne de points définitivement traités.

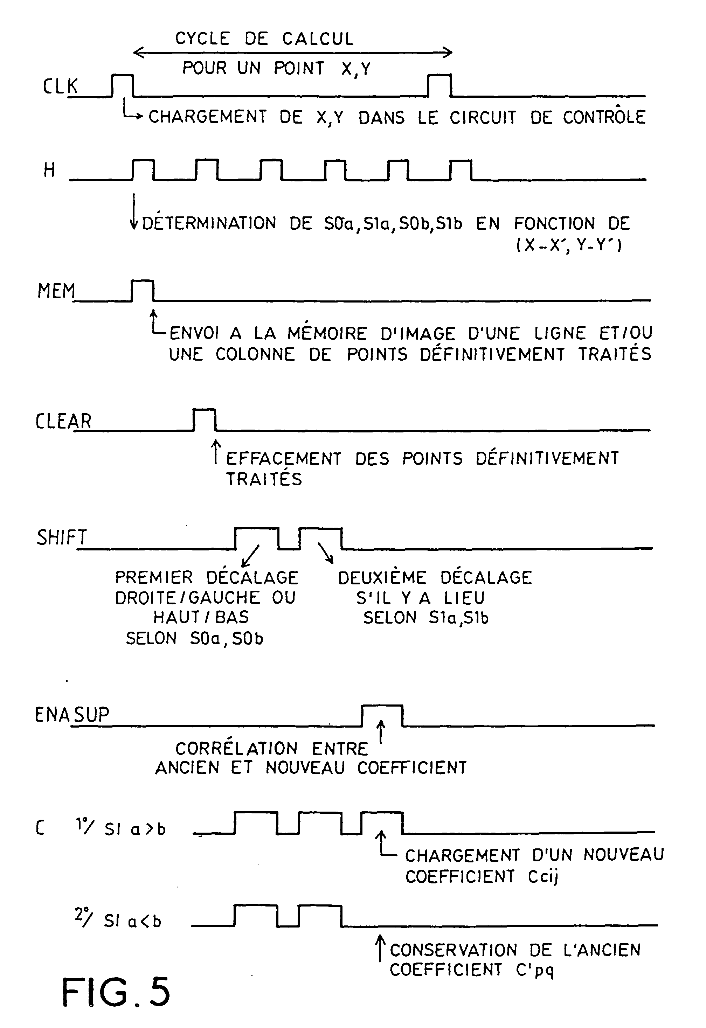

Le fonctionnement du circuit de lissage comporte les étapes suivantes, rappelées sur le chronogramme de la figure 5. Cette figure se réfère aux signaux de contrôle mentionnés à propos de la figure 4 et au signal logique sur la commande C du multiplexeur MUX3. On suppose qu'on est en cours d'un tracé fourni par le générateur de symbole, que les calculs s'effectuent à partir de la réception des coordonnées X, Y d'un point courant du tracé, et qu'il y a eu un point immédiatement précédent X', Y' fourni par le générateur pour le même tracé. Le point courant est décalé du point précédent d'une case et d'une seule, en ligne, en colonne, ou en diagonale.

### Première étape de calcul :

- réception par le circuit de contrôle 24 d'un nouveau point X, Y;
- détermination par le circuit de contrôle de la direction de déplacement à partir de la différence vectorielle (X-X', Y-Y'), et production de deux couples de signaux de commande (S0a, S1a) et (S0b, S1b) à utiliser successivement; seul un couple S0a, S1a est utilisé si le décalage n'est pas en diagonale;
- transmission à la mémoire d'image, par commande MEM du circuit de contrôle 24, de coefficients C'pq calculés au cycle précédent pour la ligne et/ou la colonne définitivement traitée, définie en fonction de la direction de déplacement détectée;
- effacement des bascules correspondantes par la commande CLEAR, affectée à la ligne et/ou à la colonne correspondante, après que leur contenu ait été transféré.

### Deuxième étape de calcul :

- exécution d'un premier décalage par une commande active SHIFT, le sens du décalage étant défini par les signaux S0a et S1a fournis par le circuit de contrôle; les sorties des bascules prennent une nouvelle valeur;

### Troisième étape de calcul :

- exécution d'un deuxième décalage par une commande active SHIFT, mais uniquement si un déplacement en diagonale a été effectué entre le point X', Y' et le point X, Y. Le sens du décalage est défini par Is signaux S0b, S1b.

A ce stade, la valeur de sortie prise pour une cellule de rang i, j qui correspond à un point de coordonnées P, Q de l'écran correspond à la valeur de coefficient d'appartenance C'pq qui avait été calculée au cycle précédent pour le même point P, Q puisque le décalage des contenus des cellules par les commandes SHIFT compense le décalage de l'ensemble de la microplage dû au déplacement (X-X', Y-Y').

On notera que les opérations de transmission à la mémoire d'image et d'effacement peuvent être effectuées après les opérations de décalage, en modifiant bien sûr les numéros de ligne ou colonne à transmettre et effacer.

### Quatrième étape de calcul :

- autorisation de corrélation ENASUP activée. La bascule REG est chargée à la valeur la plus élevée entre le nouveau coefficient présent sur l'entrée EC- et le coefficient actuellement présent à la sortie du registre.

Le circuit de calcul est prêt pour un nouveau cycle et reste en attente de nouvelles coordonnées de tracé théorique.

Pour la fin d'un tracé, il est nécessaire de décharger vers la mémoire d'image toute la microplage; ceci peut se faire par des opérations de décalage successifs et transmission d'une ligne à chaque fois. La commande ENASUP ne sera pas activée après l'effacement dans le cas d'une fin de tracé.

Des traitements spéciaux peuvent être effectués dans le cas d'intersections de deux tracés pour éviter des mélanges de couleur des deux tracés.

On a ainsi décrit l'essentiel de la structure du système d'affichage et son procédé de fonctionnement.

On peut mentionner encore que le système fonctionne même si le générateur fournit des points X, Y avec une résolution supérieure à celle de l'écran. On peut supposer par exemple que X, Y sont codés sur 12 bits et que les 10 bits de poids fort de X et Y correspondent à la résolution de l'écran. Les deux bits de poids faible sont les bits de précision à l'intérieur de la maille de l'écran.

Si les 10 bits de poids fort du nouveau point X, Y sont différents des 10 bits de poids fort du point précédent X, Y on est ramené au cas précédent : il y a un décalage de registres à faire en fonction du changement de point d'écran qui en résulte. Mais de plus, on peut prévoir que les bits de poids faible de X et Y servent à sélectionner une microplage déterminée parmi un groupe de microplages possibles. En effet, il peut être intéressant de faire varier la composition de la matrice de coefficients selon la position exacte du point de tracé théorique en résolution 12 bits. Le circuit de contrôle 24 sélectionne alors un groupe de tables de coefficients en fonction des instructions INS données par le générateur de symboles, par exemple pour définir un type de lissage particulier, et sélectionne une table parmi ce groupe en fonction des bits de précision de X, Y.

Si maintenant le passage du point X', Y' au point X, Y n'implique pas de changement de- point d'écran, il n'y a pas de décalage à faire dans le réseau de cellules. La commande SHIFT doit rester inactive. Mais cela n'empêche pas d'activer la commande ENASUP qui va effectuer la fonction de corrélation (SUP) entre les coefficients déjà stockés résultant du calcul précédent et les coefficients de consigne fournis par la table de consigne. Et là encore, la table de consigne peut dépendre des bits de précision de X, Y.

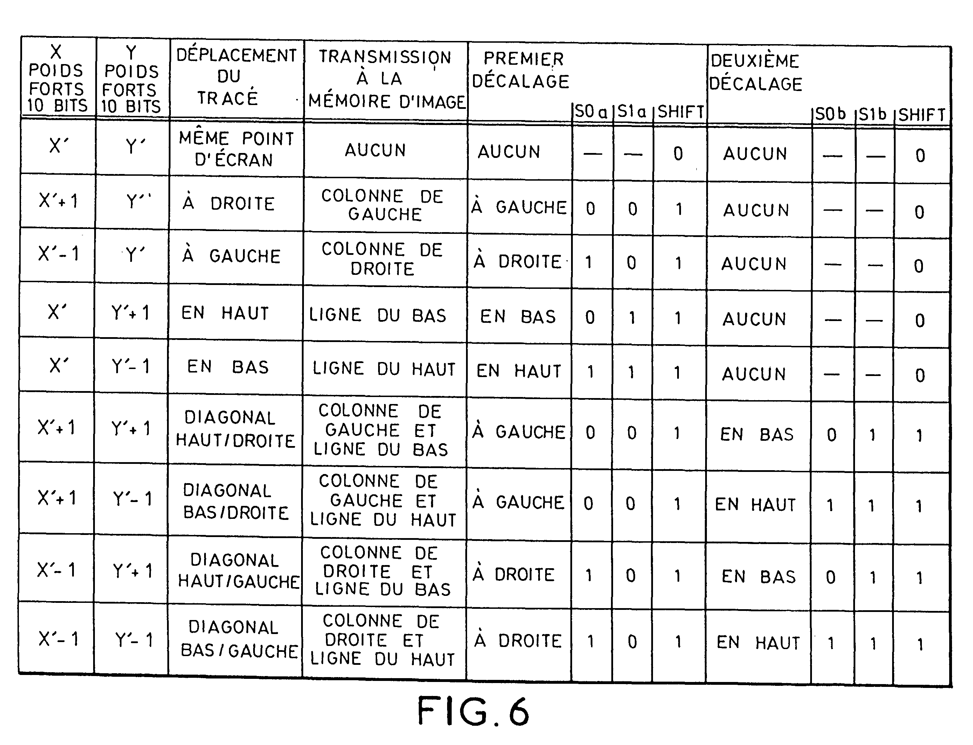

Le tableau de la figure 6 récapitule les instructions de décalage données en fonction du changement (sur 10 bits) de X', Y' à X, Y.

L'invention permet de réduire beaucoup la fréquence des accès à la mémoire d'image. On peut encore le réduire si nécessaire en utilisant des mémoires à plusieurs accès en parallèle, permettant d'écrire plusieurs mots à la fois à des adresses différentes.

## Revendications

1. Système d'affichage comprenant un générateur de symboles à afficher (10), un circuit de lissage de tracé (16), et une mémoire d'image (18, 18'), le générateur de symboles fournissant les coordonnées de points successifs d'un tracé, le circuit de lissage étant apte à calculer des codes numériques appelés coefficients d'appartenance au tracé pour un groupe G de NxM points entourant un point de coordonnées X, Y, après avoir calculé des coefficients d'appartenance au tracé pour un autre groupe G' de NxM points entourant un point de coordonnées X', Y' précédemment fourni par le générateur de symboles, système **caractérisé en ce que** le circuit de lissage comprend :
- des moyens (24) pour envoyer vers la mémoire d'image des coefficients d'appartenance au tracé uniquement pour les points du groupe G' qui n'appartiennent pas au groupe G, en fonction du vecteur reliant le point X',Y' au point X,Y,
- des moyens pour calculer les coefficients d'appartenance des points du groupe G en tenant compte des coefficients précédemment calculés pour les points communs aux groupes G et G',
- et des moyens pour conserver dans une mémoire (REG) de NxM cellules, en vue d'un prochain calcul, les coefficients d'appartenance calculés pour les points du groupe G.

2. Système selon la revendication 1, **caractérisé en ce que** le circuit de lissage comprend un réseau de NxM cellules de calcul et de mémorisation, reliées les unes aux autres de manière à pouvoir fonctionner en registre à décalage droite/gauche, gauche/droite, haut/bas, et bas/haut, et un circuit de contrôle (24) apte à définir des décalages à effectuer simultanément pour toutes les cellules.

3. Système selon la revendication 2, **caractérisé en ce que** le registre à décalage est bouclé en anneau sur lui-même, à la fois horizontalement, les sorties des cellules de l'extrémité gauche du réseau étant reliées aux entrées des cellules de l'extrémité droite et basse étant reliées aux entrées des cellules de l'extrémité haute et réciproquement.

4. Système selon l'une des revendications 2 et 3, **caractérisé en ce que** le circuit de contrôle reçoit du générateur de symboles les coordonnées X, Y d'un point du tracé et mémorise les coordonnées du point précédent pour établir des signaux de décalage en fonction du vecteur de déplacement (X-X', Y-Y').

5. Système selon l'une des revendications 2 à 4, **caractérisé en ce que** le circuit de contrôle commande l'envoi à la mémoire d'image des coefficients calculés par les cellules d'une ligne extrême, ou d'une colonne extrême, ou d'une ligne et une colonne extrêmes du réseau, en fonction du vecteur de déplacement.

6. Système selon la revendication 5, **caractérisé en ce que** le circuit de contrôle est agencé pour effacer les contenus des cellules de la ligne et/ou la colonne extrême qui ont été transmis à la mémoire d'image.

7. Système selon l'une des revendications 2 à 6, **caractérisé en ce que** chaque cellule comporte des moyens de multiplexage pour lui permettre de recevoir soit un coefficient issu d'une table sélectionnée par le circuit de contrôle, soit la sortie d'une cellule voisine sélectionnée par le circuit de contrôle.

8. Système selon la revendication 7, **caractérisé en ce que** le circuit de contrôle est apte à fournir d'abord des signaux de commande de décalage des cellules pour stocker dans une cellule le contenu d'une cellule voisine, puis un signal d'autorisation de comparaison entre un coefficient contenu dans une cellule et un coefficient fourni à cette cellule par ladite table.

9. Procédé de traitement de tracé à afficher sur un écran de visualisation à partir d'un tracé théorique fourni par un générateur de symboles, le procédé utilisant un circuit de lissage interposé entre le générateur de symboles et une mémoire d'image pour effectuer un cycle de calcul de lissage pour chaque point de coordonnées X, Y fourni par le générateur de symboles, et le circuit de lissage utilisant au cours de ce cycle au moins une matrice de coefficients prédéterminés appelés coefficients de consigne pour un groupe G de NxM points autour du point X, Y, ces points définissant un tracé élargi, le procédé consistant à calculer des coefficients réels pour chacun des NxM points du tracé élargi en fonction d'un coefficient de consigne pour ce point et d'un coefficient calculé pour ce point au cours du cycle de calcul précédent, le cycle précédent correspondant à un point précédent X', Y' du tracé théorique entouré par un groupe G' de NxM points recouvrant partiellement le groupe G,
procédé **caractérisé en ce qu'**il comporte les étapes suivantes pour chaque cycle de calcul:
- détermination dans le circuit de lissage des points du groupe G' qui n'appartiennent pas au groupe G, en fonction du vecteur reliant le point X', Y' au point X, Y;
- transmission à la mémoire d'image des coefficients réels calculés pour ces points au cours du cycle précédent et conservés en mémoire dans le circuit de lissage;
- calcul des coefficients réels pour les points du groupe G à partir des coefficients de consigne et des coefficients réels calculés pour les autres points du groupe G' et conservés en mémoire dans le circuit de lissage;
- stockage en mémoire, en vue du cycle de calcul suivant, des coefficients réels calculés pour tous les points du groupe G.

10. Procédé selon la revendication 9, **caractérisé en ce que** la détermination des points du groupe G' qui n'appartiennent pas au groupe G est faite par comparaison entre les coordonnées du point courant X, Y et du point précédent X', Y'.

## Claims

1. Display system comprising a generator of symbols to be displayed (10), a plot smoothing circuit (16), and an image memory (18, 18'), the symbols generator delivering the coordinates of successive points of a plot, the smoothing circuit being suitable for computing digital codes known as plot membership coefficients in respect of a group G of NXM points surrounding a point with coordinates X, Y, after having computed plot membership coefficients in respect of another group G' of NxM points surrounding a point with coordinates X', Y' previously delivered by the symbols generator, which system is **characterized in that** the smoothing circuit comprises:
- means (24) for dispatching to the image memory plot membership coefficients in respect solely of the points of the group G' which are not members of the group G, as a function of the vector connecting the point X', Y' to the point X, Y,
- means for computing the membership coefficients for the points of the group G while taking into account the coefficients previously computed in respect of the points common to the groups G and G',
- and means for retaining in a memory (REG) of NxM cells, with a view to a next computation, the membership coefficients computed in respect of the points of the group G.

2. System according to Claim 1, **characterized in that** the smoothing circuit comprises a network of NxM computation and storage cells, connected together in such a way as to be able to operate as a right/left, left/right, top/bottom and bottom/top shift register, and a supervisory circuit (24) suitable for defining shifts to be performed simultaneously for all the cells.

3. System according to Claim 2, **characterized in that** the shift register is wrapped around on itself, both horizontally, the outputs of the cells of the left end of the network being connected to the inputs of the cells of the right end and vice versa, and vertically, the outputs of the cells of the bottom end being connected to the inputs of the cells of the top end and vice versa.

4. System according to one of Claims 2 and 3, **characterized in that** the supervisory circuit receives the coordinates X, Y of a point of the plot from the symbols generator and stores the coordinates of the previous point so as to construct shift signals as a function of the displacement vector (X-X', Y-Y').

5. System according to one of Claims 2 to 4, **characterized in that** the supervisory circuit controls the dispatching to the image memory of the coefficients computed by the cells of an end row, or of an end column, or of an end row and an end column of the network, as a function of the displacement vector.

6. System according to Claim 5, **characterized in that** the supervisory circuit is arranged so as to erase the contents of the cells of the end row and/or column which have been transmitted to the image memory.

7. System according to one of Claims 2 to 6, **characterized in that** each cell includes multiplexing means to allow it to receive either a coefficient originating from a table selected by the supervisory circuit, or the output from a neighbouring cell selected by the supervisory circuit.

8. System according to Claim 7, **characterized in that** the supervisory circuit is suitable for delivering firstly shift control signals for the cells in order to store in a cell the content of a neighbouring cell, and then a signal enabling comparison between a coefficient contained in a cell and a coefficient delivered to this cell by the said table.

9. Method of processing a plot to be displayed on a display screen starting from a theoretical plot delivered by a symbols generator, the method using a smoothing circuit interposed between the symbols generator and an image memory in order to perform a smoothing computation cycle in respect of each point with coordinates x, Y delivered by the symbols generator, and the smoothing circuit using in the course of this cycle at least one matrix of datum coefficients originating from a data structure designated by the symbols generator, in respect of a group G of NxM points around the point X, Y, these points defining a widened plot, the method consisting in computing real coefficients in respect of each of the NxM points of the widened plot as a function of a datum coefficient for this point and of a coefficient computed in respect of this point in the course of the previous computation cycle, the previous cycle corresponding to a previous point X', Y' of the theoretical plot surrounded by a group G' of NxM points partially overlapping the group G,
which method is **characterized in that** it includes the following steps for each computation cycle:
- determination in the smoothing circuit of the points of the group G' which are not members of the group G;
- transmission to the image memory, as a function of the vector connecting the point X', Y' to the point X, Y, of the real coefficients computed in respect of these points in the course of the previous cycle and retained in memory in the smoothing circuit;
- computation of the real coefficients in respect of the points of the group G on the basis of the datum coefficients and of the real coefficients computed in respect of the other points of the group G' and retained in memory in the smoothing circuit;
- memory storage, with a view to the following computation cycle, of the real coefficients computed in respect of all the points of the group G.

10. Process according to Claim 9, **characterized in that** the determination of the points of the group G' which are not members of the group G is carried out by comparison between the coordinates of the current point X, Y and of the previous point X', Y'.

## Patentansprüche

1. Anzeigesystem mit einem Generator (10) für anzuzeigende Symbole, einer Glättungsschaltung (16) für Linien und einem Bildspeicher (18, 18'), wobei der Symbolgenerator die Koordinaten aufeinanderfolgender Punkte einer Linie liefert und die Glättungsschaltung digitale Kodes, Eigenschaftskoeffizienten der Linie genannt, für eine Gruppe G von N*M Punkten berechnen kann, die einen Punkt mit den Koordinaten X, Y umgeben, nachdem Eigenschaftskoeffizienten der Linie für eine andere Gruppe G' von N*M Punkten berechnet wurden, die einem vom Symbolgenerator vorher gelieferten Punkt mit den Koordinaten X', Y' umgeben,
**dadurch gekennzeichnet, daß** die Glättungsschaltung aufweist:
- Mittel (24), um zum Bildspeicher Eigenschaftskoeffizienten der Linie abhängig von dem den Punkt X', Y' mit dem Punkt X, Y verbindenden Vektor nur für die Punkte der Gruppe G' zu senden, die nicht zugleich zur Grupe G gehören,
- Mittel, um die Eigenschaftskoeffizienten der Punkte der Gruppe G unter Berücksichtigung der vorher für die gemeinsamen Punkte der Gruppen G und G' berechneten Koeffizienten zu berechnen,
- und Mittel, um in einem Speicher (REG) mit N*M Zellen die für die Punkte der Gruppe G berechneten Eigenschaftskoeffizienten für eine spätere Berechnung zu speichern.

2. System nach Anspruch 1, **dadurch gekennzeichnet, daß** die Glättungsschaltung ein Netz von N*M Rechen- und Speicherzellen, die so miteinander verbunden sind, daß sie als Schieberegister von rechts nach links, von links nach rechts, von oben nach unten und von unten nach oben arbeiten können, und eine Steuerschaltung (24) enthält, die gleichzeitig für alle Zellen Verschiebungen definieren kann.

3. System nach Anspruch 2, **dadurch gekennzeichnet, daß** das Schieberegister ringförmig auf sich selbst zurückgeschleift ist, und zwar sowohl horizontal, wobei die Ausgänge der Zellen am linken Rand des Netzes mit den Eingängen der Zellen am rechten Rand und umgekehrt verbunden sind, als auch vertikal, wobei die Ausgänge der Zellen am unteren Rand mit den Eingängen der Zellen am oberen Rand und umgekehrt verbunden sind.

4. System nach einem der Ansprüche 2 und 3, **dadurch gekennzeichnet, daß** die Steuerschaltung vom Symbolgenerator die Koordinaten X, Y eines Punkts des Linienverlaufs empfängt und die Koordinaten des vorhergehenden Punkts speichert, um Verschiebesignale abhängig vom Verschiebevektor [X-X', Y-Y'] zu bilden.

5. System nach einem der Ansprüche 2 bis 4, **dadurch gekennzeichnet, daß** die Steuerschaltung die Übertragung der von den Zellen einer randseitigen Zeile oder randseitigen Spalte oder den Zellen einer randseitigen Zeile und einer randseitigen Spalte des Netzes berechneten Koeffizienten an den Bildspeicher abhängig vom Verschiebevektor steuert.

6. System nach Anspruch 5, **dadurch gekennzeichnet, daß** die Steuerschaltung so ausgebildet ist, daß die Inhalte der Zellen der Zeile und/oder Spalte am Rand, die an den Bildspeicher gesendet wurden, gelöscht werden.

7. System nach einem der Ansprüche 2 bis 6, **dadurch gekennzeichnet, daß** jede Zelle Multiplexiermittel besitzt, damit sie entweder einen Koeffizienten aus einer durch die Steuerschaltung ausgewählten Tabelle oder das Ausgangssignal einer von der Steuerschaltung ausgewählten Nachbarzelle empfangen kann.

8. System nach Anspruch 7, **dadurch gekennzeichnet, daß** die Steuerschaltung zuerst Steuersignale für die Verschiebung der Zellen, um in einer Zelle den Inhalt einer Nachbarzelle zu speichern, und dann ein Signal zur Freigabe des Vergleichs zwischen einem in einer Zelle enthaltenen Koeffizienten und einem an diese Zelle von der Tabelle gelieferten Koeffizienten liefern kann.

9. Verfahren zur Verarbeitung eines Linienverlaufs, der auf einem Anzeige-Bildschirm angezeigt werden soll, ausgehend von einem theoretischen Verlauf, der von einem Symbolgenerator geliefert wird, wobei das Verfahren eine zwischen dem Symbolgenerator und einem Bildspeicher liegende Glättungsschaltung verwendet, um einen Rechenzyklus zur Glättung für jeden vom Symbolgenerator gelieferten Punkt mit den Koordinaten X, Y durchzuführen, und wobei die Glättungsschaltung während dieses Zyklus mindestens eine Matrix von aus einer vom Symbolgenerator bestimmten Datenstruktur kommenden Sollkoeffizienten für eine Gruppe G von N*M Punkten um den Punkt X, Y herum verwendet, die einen verbreiterten Linienverlauf definieren, und das Verfahren darin besteht, reale Koeffizienten für jeden der N*M Punkte des verbreiterten Linienverlaufs abhängig von einem Soll-Koeffizienten für diesen Punkt und von einem für diesen Punkt während des vorhergehenden Rechenzyklus berechneten Koeffizienten zu berechnen, wobei der vorhergehende Zyklus einem vorhergehenden Punkt X', Y' des theoretischen Linienverlaufs entspricht, der von einer Gruppe G' von N*M Punkten umgeben ist, die sich teilweise mit denen der Gruppe G überlappen,
**dadurch gekennzeichnet, daß** das Verfahren die folgenden Schritte für jeden Rechenzyklus enthält:
- Bestimmung der nicht zur Gruppe G gehörenden Punkte der Gruppe G' in der Glättungsschaltung,
- Übertragung der für diesen Punkt während des vorhergehenden Zyklus berechneten und im Speicher der Glättungsschaltung gespeicherten realen Koeffizienten abhängig von dem den Punkt X',Y' mit dem Punkt X, Y verbindenden Vektor in den Bildspeicher,
- Berechnung der realen Koeffizienten für die Punkte der Gruppe G ausgehend von den Sollkoeffizienten und den für die anderen Punkte der Gruppe G' berechneten und in der Glättungsschaltung gespeicherten realen Koeffizienten,
- Speicherung der für alle Punkte der Gruppe G berechneten realen Koeffizienten im Hinblick auf den nächstfolgenden Rechenzyklus.

10. Verfahren nach Anspruch 9, **dadurch gekennzeichnet, daß** die Bestimmung der Punkte der Gruppe G', die nicht zur Gruppe G gehören, durch Vergleich zwischen den Koordinaten des laufenden Punkts X, Y und denen des vorhergehenden Punkts X', Y' erfolgt.
